(19) Europäisches Patentamt
European Patent Office
Office européen des brevets

(11) **EP 3 521 854 B1**

(12) **EUROPEAN PATENT SPECIFICATION**

(45) Date of publication and mention
of the grant of the patent:
**14.07.2021   Bulletin 2021/28**

(51) Int Cl.:
*G01S 7/48* (2006.01)      *G01S 17/10* (2020.01)
*G01B 9/02* (2006.01)      *G01S 7/4865* (2020.01)
*G01S 17/88* (2006.01)      *H01S 3/11* (2006.01)
*H01S 3/13* (2006.01)

(21) Application number: **18154647.4**

(22) Date of filing: **01.02.2018**

(54) **FREQUENCY DOMAIN DISTANCE MEASUREMENT CROSS CORRELATION**

FREQUENZBEREICHSABSTANDSMESSUNGSKREUZKORRELATION

CORRÉLATION CROISÉE DE MESURE DE DISTANCE DE DOMAINES DE FRÉQUENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.08.2019   Bulletin 2019/32**

(73) Proprietor: **OHB System AG
28359 Bremen (DE)**

(72) Inventors:
• **Eder, Bastian
80339 München (DE)**
• **Hutterer, Martin
85221 Dachau (DE)**

(74) Representative: **Hoffmann Eitle
Patent- und Rechtsanwälte PartmbB
Arabellastraße 30
81925 München (DE)**

(56) References cited:
**EP-A1- 2 405 286**

• **SPIE, PO BOX 10 BELLINGHAM WA 98227-0010
USA, 26 August 2005 (2005-08-26), XP040207314,**
• **W. GAO ET AL: "Measurement technologies for
precision positioning", CIRP ANNALS., vol. 64,
no. 2, 1 January 2015 (2015-01-01), pages 773-796,
XP055492565, NL, CH, FR ISSN: 0007-8506, DOI:
10.1016/j.cirp.2015.05.009**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

The present invention relates to high precision distance measurements and clock synchronization. More specifically, the present invention uses a frequency domain distance measurement.

[Background]

Optical links are becoming more and more important for future space applications in order to fulfil the demanding requirements in terms of measurement accuracy. Hereby, optical links are used for high precision ranging (relative or absolute), velocity determination in the km/s area as well as frequency and time transfer.
Distance measurements are used for constellation flights and scientific research missions such as Grace-FO (50 nm resolution, relative), ESTS Study ($\mu$m), IRASSI (pm) and NGGM (< $\mu$m). In addition, the frequency and time synchronization will become an important performance enhancer for GNSS systems such as Galileo (Inter-satellite and inter-orbit timing transfer in the ps-fs timescale) as well as ground-to-space applications.
In the prior art, the following methods for measuring distance are known:

- **RF-Links** provide 100 $\mu$m resolution. However, they are very sensitive to phase jumps/variations and only provide relative distance measurements.

- **Optical continuous wave laser links** (NGGM, Grace-FO, Lisa) provide 50 nm to pm resolution. However, they are highly depending on laser noise and the distance is limited by the coherence length. Furthermore, they provide only relative distance information and require a complex system.

- **Short pulse lasers** provide 0.1 mm resolution at maximum. They are usually limited by time of flight method and the pulse length.

- **Femtosecond pulse lasers** provide absolute distance measurements (< 50 nm resolution in lab systems) and time and frequency transfer (fs-as). However, this technique requires the most sophisticated frequency comb systems as used within Dual Comb Interferometry and Synthetic Wavelength Interferometry.

A scheme for high-precision, absolute length measurement for an arbitrary optical distance using a pulse train from a femtosecond laser is known from Jun Ye: "Absolute measurement of a long, arbitrary distance to less than an optical fringe" in Optics Letters 2004, vol. 29, no. 10.
See also B. Eder, M. Hutterer, L. Pedrosa, S. Schweyer, P. Putzer, N. Lemke, R. Kienberger, and U. Hugentobler, "Frequency Domain Distance Measurement for Formation Flights in Space," in 2015 European Conference on Lasers and Electro-Optics - European Quantum Electronics Conference, (Optical Society of America, 2015).
Furthermore, high precision distance measurements are important for clock synchronization. Especially in global navigation systems, precise clock synchronization is required for an accurate positioning on the surface of the earth. State-of-the-art navigation systems are provided with updated clock signals using signals from ground stations. It is contemplated to synchronize the satellites with each other without involving ground stations. The location and the absolute time $t_0$ are decisive for the synchronization.
A prior art synchronization scheme is described in Jean-Daniel Deschênes, Laura C. Sinclair, Fabrizio R. Giorgetta, William C. Swann, Esther Baumann, Hugo Bergeron, Michael Cermak, Ian Coddington, and Nathan R. Newbury, "Synchronization of Distant Optical Clocks at the Femtosecond Level" in Phys. Rev. X 6, 021016. This document uses three frequency comb lasers leading to a complex setup.
A prior art distance measurement scheme is described in Kim et.al. "Absolute Distance Measurement using Femtosecond Laser", Nano- and Micro-metrology, Proceedings of SPIE, Vol. 5858.
Another prior art distance measurement scheme is described in Gao et.al. "Measurement technologies for precision positioning", CIRP Annals - Manufacturing Technology 64 (2015), pages 773-796.
A prior art distance measurement device is described in EP 2 405 286 A1.
In view thereof, there exists a need for high precision distance measurements and clock synchronization with a simple and cost effective design.

[Summary of the invention]

To achieve or at least partially achieve the above-mentioned aim, apparatuses and methods according to the invention are defined in the independent claims. Particular embodiments are defined in the dependent claims, and are explained in the present description.

One aspect relates to an apparatus for generating a Frequency Domain Distance Measurement Cross Correlation, FDDM-CC, signal. The apparatus comprises a first input terminal adapted to receive first laser pulses and a second input terminal adapted to receive second laser pulses. A detector is adapted to combine the first laser pulses and the second laser pulses and transform the combined laser pulses into a voltage signal. A controller is adapted to calculate a difference between relative voltages of two different harmonics of the voltage signal in frequency domain as the FDDM-CC signal.

This Frequency Domain Distance Measurement Cross Correlation (FDDM-CC) signal is a new signal which enables distance determination/clock synchronization which meets the requirements of the latest space related projects, but is far more cost-efficient, simplistic and therefore more robust in its setup than comparable systems.

Especially, the FDDM-CC method provides $< \mu$m distance resolution range and absolute distance information with a simple optical setup. It can be used for fiber stabilization and frequency transfer. Furthermore, it allows for the detection of high relative velocities. In addition, the FDDM-CC method works with low light intensities.

In summary, FDDM-CC fills a gap in the field of distance determination, while ensuring an adequate balance between resolution and complexity. The FDDM-CC algorithm can be directly applied to other techniques like SWLI (SWLI-CC)to increase measurement resolution and enable time and frequency transfer.

In a preferred embodiment, the two different harmonics are neighboring harmonics.

In a preferred embodiment, the two different harmonics are the twelfth and thirteenth harmonics.

However, it should be noted that the distance measurement/clock synchronization improves as the used harmonics get higher. For example, using the 24th and 25th harmonics (or even the 29th and 30th harmonics) can further improve the accuracy. The usage of higher order harmonics is only limited by the characteristics of the electric equipment.

In a preferred embodiment, the apparatus further comprises a first pulse laser adapted to output the first laser pulses, the second laser pulses are received from a second pulse laser, and the controller is adapted to control the repetition rate of the first pulse laser based on the FDDM-CC signal such that the first pulse laser is locked to the second pulse laser.

With this configuration, high precision clock synchronization can be achieved.

In a preferred embodiment, the apparatus further comprises a pulse laser adapted to output laser pulses, a reference mirror, and a beam splitter adapted to split the laser pulses and transmit the split laser pulses to the reference mirror and a target mirror located at a target object. The first input terminal is adapted to receive the laser pulses reflected from the reference mirror. The second input terminal is adapted to receive the laser pulses reflected from the target mirror as the second laser pulses. The controller is adapted to determine the distance to the target object based on the FDDM-CC signal

With this configuration, high precision distance measurement can be achieved.

In a preferred embodiment, the controller is adapted to calculate a time offset between two adjacent laser pulses based on the FDDM-CC signal and determine the distance based on the calculated time offset.

In a preferred embodiment, the time offset is a relative time offset defined as the time offset between two adjacent laser pulses relative to the repetition rate of the pulse laser.

In a preferred embodiment, the controller is adapted to determine the relative time offset dt by using the expression $dU\_m= |\cos(m \cdot n \cdot dt)|$, wherein dUm is a relative voltage of the m-th harmonic.

In a preferred embodiment, the difference between the two different harmonics is calculated based on the m-th and n-th harmonics with integers m and n, and the controller is adapted to determine the distance to the target object further based on the voltage of the i-th harmonic with i<m<n.

Another aspect relates to a method performed by an apparatus for generating a Frequency Domain Distance Measurement Cross Correlation, FDDM-CC, signal, wherein the apparatus comprises a first input terminal adapted to receive first laser pulses and a second input terminal adapted to receive second laser pulses. The method comprises combining the first laser pulses and the second laser pulses and transform the combined laser pulses into a voltage signal, and calculating a difference between the relative voltages of two different harmonics of the voltage signal in frequency domain as the FDDM-CC signal.

[Brief description of the drawings]

Fig. 1 shows the general layout of an apparatus for determining a distance to a target object according to an embodiment of the present invention.

Fig. 2 shows the influence of the repetition rate of the pulse laser on the time offset between two adjacent laser pulses.

Fig. 3 shows the dependency of the harmonics of the signal detected by the detector on the relative offset.

Fig. 4 shows two incoming laser pulses and illustrates the mathematical correlation between pulse intensities, repetition rate, time offset and their impact in the complex domain due to Fourier Transformation.

Fig. 5 shows the dependency of the relative voltage of a harmonics on the relative offset in correlation to the pulse's time offset.

Fig. 6 shows the dependency of the relative voltage on the relative offset for the 12th and 13th harmonics.

Fig. 7 shows the difference between the 12th and 13th harmonics.

Fig. 8 shows an exemplary circuit for obtaining the FDDM-CC signal.

Fig. 9 shows a circuit that analyzes the first, second, twelfth and thirteenth harmonics.

Fig. 10 shows an application of the FDDM-CC signal for coupling the repetition rates of two optical oscillators.

Fig. 11 shows the resulting accuracy when two oscillators are stabilized with the design of fig. 9.

Fig. 12 shows a setup in which the FDDM CC signal is used to lock the frequency of two optical oscillators.

[Detailed description]

The present invention shall now be described in conjunction with specific embodiments.

This description summarises the PhD thesis by the inventor Bastian Eder entitled "ADAM & EVA - Absolute Distance Accurately Measured & External Vehicle Adjustment" (https://mediatum.ub.tum.de/1350573).

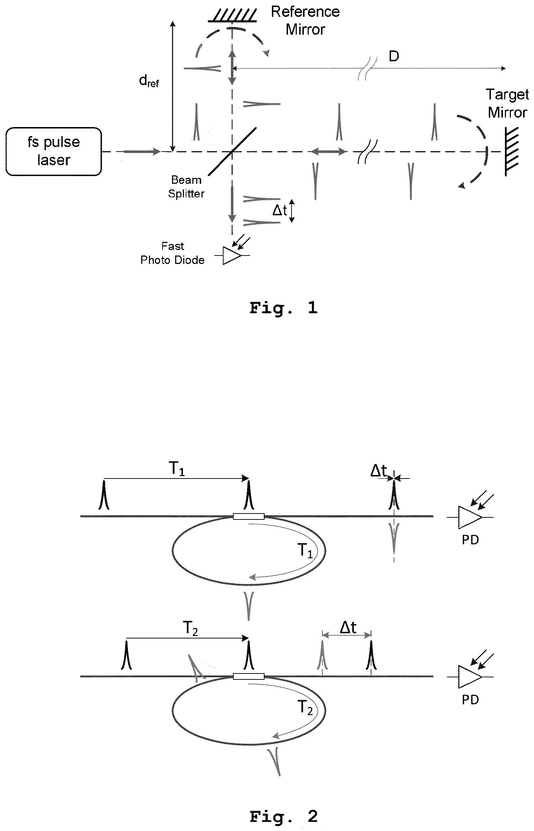

Fig. 1 shows the general layout of an apparatus for generating a Frequency Domain Distance Measurement Cross Correlation, FDDM-CC, signal according to an embodiment of the present invention. In the apparatus, laser pulses propagate in a Michelson setup.

The apparatus comprises a pulse laser adapted to output laser pulses, a reference mirror, a beam splitter adapted to split the laser pulses and transmit the split laser pulses to the reference mirror and a target mirror located at the target object, and a detector adapted to receive the laser pulses reflected by the reference mirror and the target mirror and transform the received laser pulses into an electrical signal.

The pulse laser is preferably a femtosecond pulse laser (pulse duration <500fs; repetition rate approx. 80MHz) whose repetition rate is kept constant.

The reference mirror is located at a fixed distance $d_{ref}$ from the beam splitter. The detector may be a fast photodiode.

The absolute distance D to the target mirror can be calculated using the following formula, if the number n of pulses between the apparatus and the target object is known.

$$D = \frac{(n \cdot T + \Delta t)c}{2} + d_{ref}$$

c is the velocity of light. T is the time distance between the laser pulses, i.e. the reciprocal of the repetition rate. $\Delta t$ is the time offset between two adjacent laser pulses detected by the detector. The present invention deals with measuring the time offset $\Delta t$ with high precision in order to derive an accurate value for the absolute distance D.

Fig. 2 shows the influence of the repetition rate 1/T of the pulse laser on the time offset $\Delta t$ between two adjacent laser pulses. A variation of the repetition rate ($1/T_1 \neq 1/T_2$) changes the separation in time of the incoming pulses. Measurement of different separation in time and repetition rate gives information about the number of pulses between the apparatus and the target object.

Instead of the time offset $\Delta t$ a "relative offset dt" can be used.

$$dt = \frac{\Delta t}{T} = \Delta t \cdot f_{REP}$$

That is, the relative offset dt is given by the time offset $\Delta t$ relative to the time distance T of the pulses. The relative offset is independent from the absolute pulse distance (repetition rate) of the pulse laser. Due to this advantage, the relative offset is used in the following, although the present invention is not limited thereto (e.g. the time offset $\Delta t$ could also be used).

The present invention uses the properties of the detected laser pulses in the frequency domain. More specifically, the harmonics of the repetition rate are modulated depending on the relative offset dt of the incoming pulses.

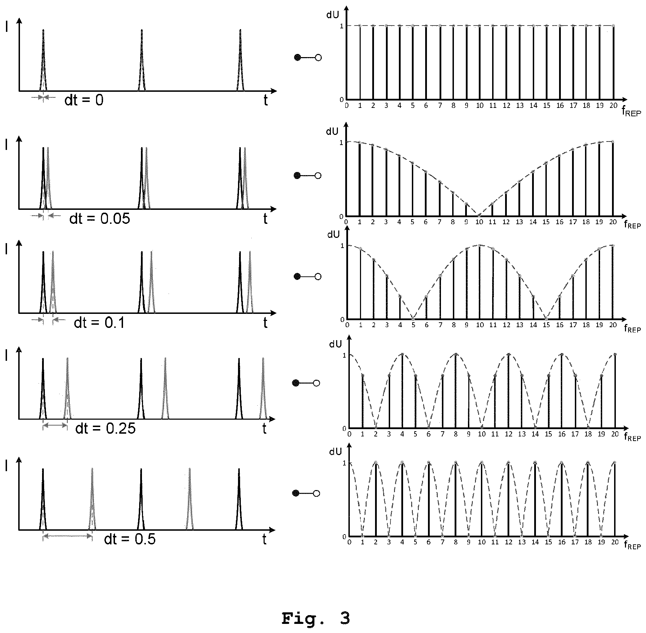

Fig. 3 shows the dependency of the harmonics of the signal detected by the detector on the relative offset dt. If the incoming pulses overlap (dt=0), the frequency spectrum shows peaks at multiples of the repetition rate $f_{REP}$ of the pulse laser. In this case, all harmonics have the same amplitude.

For dt=0.05, the 10th harmonic vanishes and the 20th harmonic is at maximum again.

For dt=0.1, the 10th harmonic is at maximum again. For dt=0.25, the second harmonic is at zero.

For the extreme case dt=0.5, the odd harmonics vanish while the even harmonics are at the maximum value. This can be explained by considering that the detector now sees an oscillator with twice the repetition rate.

In summary, the relative offset determines the amplitude of the harmonics of the repetition rate.

This behavior of the harmonics can be explained as follows. Two incoming pulses $f_1$ and $f_2$ can be modelled by the following two formulas:

$$f_1(t) = C_1 \cdot \sum_n e^{-\left(\frac{t-(nt_0 - \frac{\Delta t}{2})}{\sigma}\right)^2}$$

$$f_2(t) = C_2 \cdot \sum_n e^{-\left(\frac{t-(nt_0 + \frac{\Delta t}{2})}{\sigma}\right)^2}$$

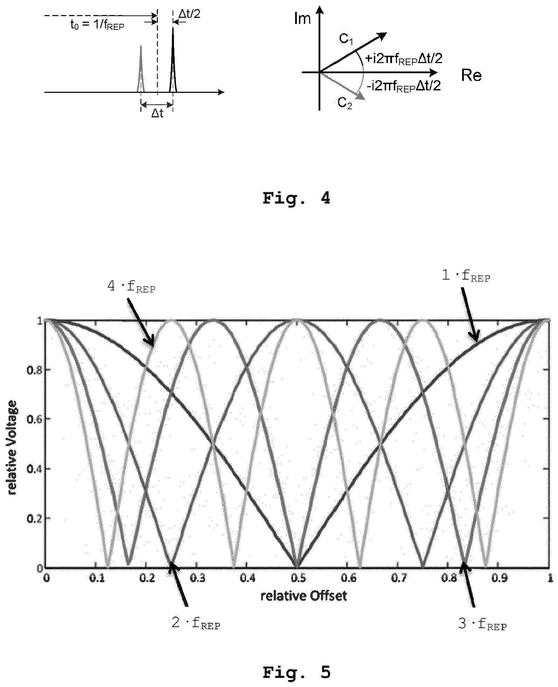

The detector detects the sum of these two pulses (see fig. 4). The corresponding signal in the frequency domain reads:

$$\mathcal{F}(\omega) = \mathcal{F}_1(\omega) + \mathcal{F}_2(\omega) = \sum_n e^{-i\omega n t_0}\left(c_1 e^{+\frac{i\omega\Delta t}{2}} + c_2 e^{-\frac{i\omega\Delta t}{2}}\right)$$

From this relation it can be derived that the amplitude of the harmonics depends on the incoming time offset $\Delta t$ between the pulses. The scalar product of the vectors shown in fig. 4 results in a measurable voltage. This voltage of each harmonic gives information about the time offset. More specifically, the peak voltage of the mth harmonics is given by

$$U_{m^{th}\,Peak} = \sqrt{(U_{m,1} + U_{m,2})^2 \cos^2\left(2\pi m f_{REP} \frac{\Delta t}{2}\right) + (U_{m,1} - U_{m,2})^2 \sin^2\left(2\pi m f_{REP} \frac{\Delta t}{2}\right)}$$

Here $U_{m,1}$ is the voltage of the m-th harmonic of the pulses, propagating the reference path. $U_{m,2}$ is the voltage of the m-th harmonic of the pulses, propagating the target path.

For simplification, the relative time offset dt is used with dt = $f_0 \cdot \Delta t$, dt $\in$ [0,1]:

$$U_m\left(dt,\ U_{m,1},\ U_{m,2}\right) = \sqrt{U_{m,1}^2 + U_{m,2}^2 + 2U_{m,1}U_{m,2}\,cos(m2\pi dt)}$$

With the relative voltage $dU_m = \dfrac{U_m}{U_{m,1}+U_{m,2}}$ and under the assumption that $U_{m,1}$ and $U_{m,2}$ are equal, the equation simplifies to

$$dU_m = \left|cos(m \cdot \pi \cdot dt)\right|.$$

It should be noted that the assumption that $U_{m,1}$ and $U_{m,2}$ are equal is only for better understanding the invention since it simplifies the prior formula strongly. The principle is also working with non-equal voltages.

The above relation for $dU_m$ is exemplified in fig. 5 for the first to fourth harmonics. Hence, by measuring the relative voltage of at least the first harmonic, the relative offset dt can be derived. The precision can be improved by considering a plurality of harmonics. Measurements with a 80MHz oscillator showed absolute distance resolution of 1mm. The relative voltage $dU_m$ is also called an FDDM (Frequency Domain Distance Measurement) signal in the following.

The accuracy of this method can be further improved by looking at cross correlations between different harmonics.

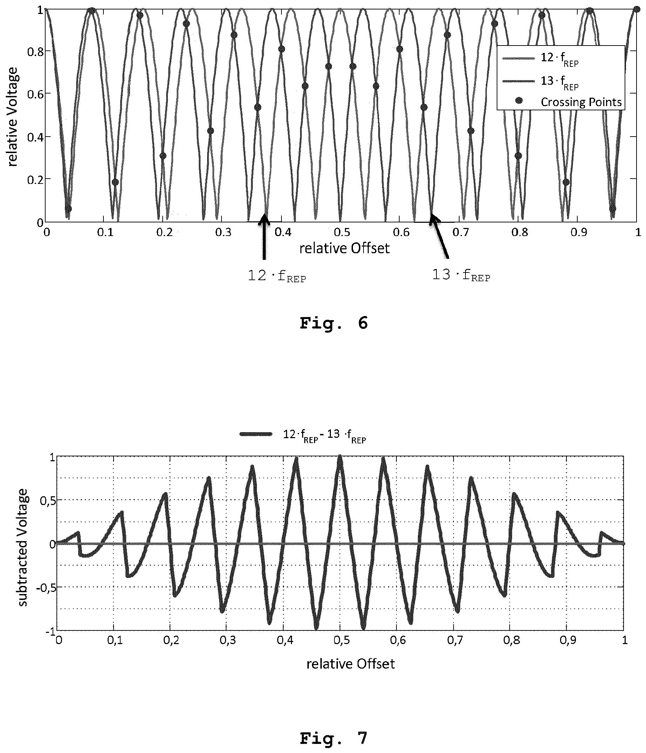

Fig. 6 shows the dependency of the relative voltage on the relative offset for the 12th and 13th harmonics. The harmonics cross each other at multiple points.

By subtracting the relative voltages for the different harmonics, the crossing points can be determined.

Fig. 7 shows the difference between the 12th and 13th harmonics. The signal shows in fig. 7 is also called a FDDM-CC (cross correlation) signal. The subtracted voltage is measured whereby the relative offset can be obtained. With the FDDM-CC method, an accuracy of the distance to the target object of below 1mm has been obtained.

As can be seen in Fig. 7 the output has larger slopes as the original signal itself. The higher the slope of the signal, the higher the resolution of the system. Generally a system can be locked with this signal to an object by implementing the error signal into the complete setup, that the oscillator locks its repetition rate to the distance of the object. By reading out the frequency the distance can be accurately measured.

Is the CC signal used for a stabilization loop, the loop tries to zero the CC signal. This means, the stabilization points of the FDDM CC method depend on voltages of the separate harmonic voltages.

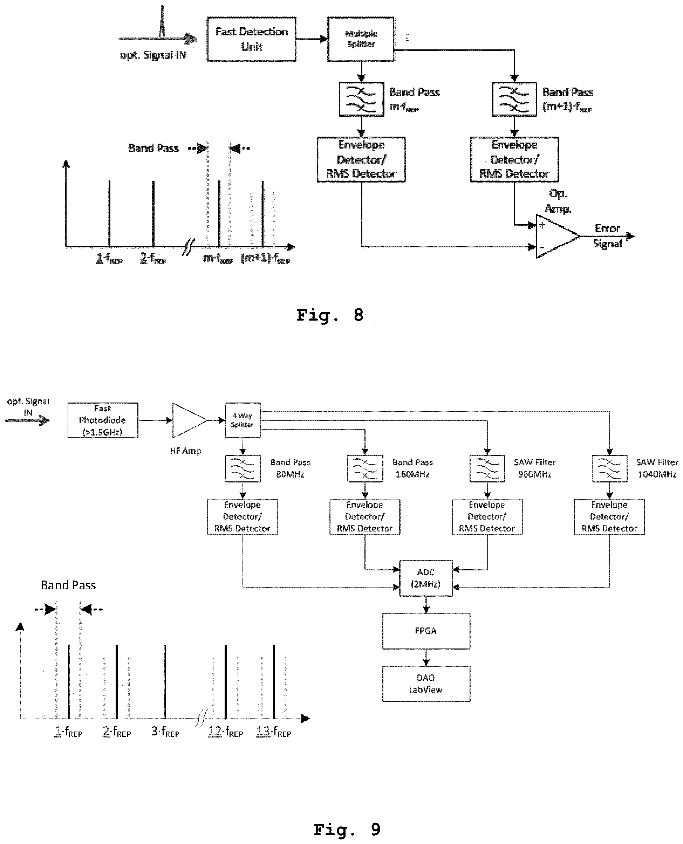

Fig. 8 shows an exemplary circuit for obtaining the FDDM-CC signal. The optical signal is converted by the fast detection unit into an electrical signal. This electrical signal is split by a splitter into multiple signals which are supplied to band pass filters. Fig. 8 shows the case of adjacent (neighboring) harmonics m and m+1. However, the present invention is not limited thereto and any combination of harmonics can be used. The signal from each band pass filter is supplied to a corresponding envelope detector/RMS detector. Using the signal from the envelope detector/RMS detectors, a difference signal (the FDDM-CC signal) is generated.

Ambiguities can be resolved by taking fig. 5 into account. For example, if a subtracted voltage of 0.25 is measured and the relative voltage for the first harmonic is 0.95, it is determined that the relative offset is 0.1.

Fig. 9 shows a circuit that analyzes the first, second, twelfth and thirteenth harmonics (of a 80MHz repetition rate). In this case, a FPGA is used to control the amplitudes of the harmonics.

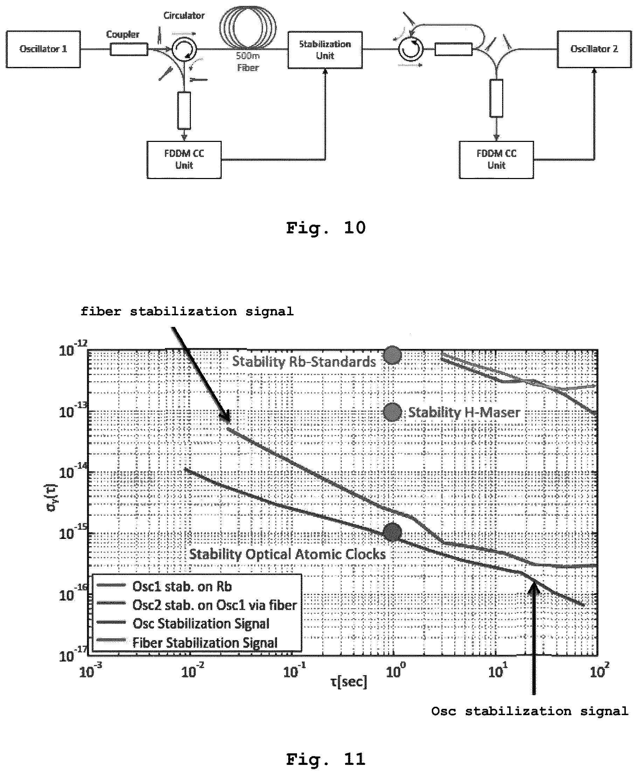

Fig. 10 shows an application of the FDDM-CC signal for coupling the repetition rates of two optical oscillators. This design is used to simulate the transport the time from oscillator 1 to oscillator 2. Furthermore, the resolution of larger distances can be simulated with the design shown in fig. 10. Especially, a 500m fiber is used to connect the two oscillators.

The design is similar to the general design shown in fig. 1. Oscillator 2 serves as the target device. The length of the fiber can be determined very accurately. However, the fiber is very sensitive to environmental changes (pressure, temperature, vibrations,...). The fiber is stabilized in order to fix the distance between oscillator 1 and oscillator 2. The stabilized fiber can then be used to transport the absolute time $t_0$ from oscillator 1 to oscillator 2. Oscillator 2 receives information from oscillator 1 and can be stabilized with the new method.

Fig. 11 shows the resulting accuracy when the two oscillators are stabilized with the design of fig. 10.

Using the FDDM-CC method, the fiber could be stabilized and the second oscillator could be stabilized with respect to the first oscillator. As can be seen from fig. 11, frequency and time can be transferred between two points with an accuracy sufficient for Rb-standards and H-Maser. Even the stability of atomic clocks can be obtained. Translated into distance resolution, an accuracy of 150nm at a measurement time of 1 sec can be obtained.

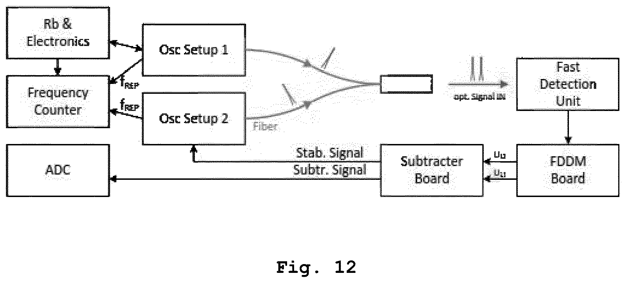

Fig. 12 shows an exemplary setup in which the FDDM CC signal is used to lock the frequency of two optical oscillators. Both oscillators are fiber coupled. The overlap of the pulses is done by a fibre coupler. It is a further advantage of the invention that no PM fibers need to be used since the polarization of the laser pulses is not important for the functioning of the invention.

The combination of the shown blocks "Fast detection unit", "FDDM Board" and "Subtractor Board" create together the mentioned FDDM-CC signal. The signal itself can be used for a stabilization loop by using the electric voltage of the FDDM-CC signal. The voltage as an error signal for a stabilization unit (using a Proportional - Integral Controller) within an oscillator (shown here Oscillator 2 with an internal Repetition Rate controller) results in a locked system.

Using the Stabilization Signal output of the Subtracter Board for the oscillator setup creates a stabilization loop which locks the second oscillator to the first oscillator. When the stabilization loop is activated the voltage of the failure signal results in the stabilization performance. The voltage is recorded with the ADC. Since the Subtracter Board contains a PI-Unit and a unit to control offset and gain for the output, the stabilization signal can be modified to reach the requirements of the oscillator setup (Vstab > 0 V). When the stabilization loop is active the repetition rate of oscillator 1 and 2 should be equal.

The new FDDM-CC method can not only be used for satellite applications but also for distributing time and frequency information in terrestrial applications. For example, it can be contemplated to distribute the time of an atomic clock to locations via a fiber optical network over great distances (>1000km) .

It is an important advantage of the FDDM-CC method that only electrical signals are processed (once the laser pulses are received by the detector). That is, no optical components are need to be used. This simple design results in improved robustness and cost efficiency.

**Claims**

1. Apparatus for generating a Frequency Domain Distance Measurement Cross Correlation, FDDM-CC, signal, comprising:

   a first input terminal adapted to receive first laser pulses;
   a second input terminal adapted to receive second laser pulses;
   a detector adapted to combine the first laser pulses and the second laser pulses and transform the combined laser pulses into an voltage signal;
   **characterized by**
   a controller adapted to calculate a difference between relative voltages of two different harmonics of the voltage signal in frequency domain as the FDDM-CC signal.

2. Apparatus according to claim 1, wherein the two different harmonics are neighboring harmonics.

3. Apparatus according to claim 1 or 2, wherein the two different harmonics are the twelfth and thirteenth harmonics.

4. Apparatus according to one of the preceding claims, wherein
   the apparatus further comprises a first pulse laser adapted to output the first laser pulses,
   the second laser pulses are received from a second pulse laser, and
   the controller is adapted to control the repetition rate of the first pulse laser based on the FDDM-CC signal such that the first pulse laser is locked to the second pulse laser.

5. Apparatus according to claim 1, further comprising
   a pulse laser adapted to output laser pulses;
   a reference mirror; and
   a beam splitter adapted to split the laser pulses and transmit the split laser pulses to the reference mirror and a target mirror located at a target object, wherein
   the first input terminal is adapted to receive the laser pulses reflected from the reference mirror,
   the second input terminal is adapted to receive the laser pulses reflected from the target mirror as the second laser pulses, and
   the controller is adapted to determine the distance to the target object based on the FDDM-CC signal.

6. Apparatus according to claim 5, wherein the controller is adapted to calculate a time offset between two adjacent laser pulses based on the FDDM-CC signal and determine the distance based on the calculated time offset.

7. Apparatus according to claim 6, wherein the time offset is a relative time offset defined as the time offset between two adjacent laser pulses relative to the repetition rate of the pulse laser.

8. Apparatus according to claim 7, wherein the controller is adapted to determine the relative time offset dt by using the expression

$$dU_m = |cos(m \cdot \pi \cdot dt)|$$

wherein $dU_m$ is a relative voltage of the m-th harmonic.

9. Apparatus according to one of the claims 5-8, wherein
the difference between the two different harmonics is calculated based on the m-th and n-th harmonics with integers m and n, and
the controller is adapted to determine the distance to the target object further based on the voltage of the i-th harmonic with i<m<n.

10. Method performed by an apparatus for generating a Frequency Domain Distance Measurement Cross Correlation, FDDM-CC, signal, wherein the apparatus comprises a first input terminal adapted to receive first laser pulses and a second input terminal adapted to receive second laser pulses, wherein the method comprises:

combining the first laser pulses and the second laser pulses and transform the combined laser pulses into an voltage signal,
**characterized by**
calculating a difference between relative voltages of two different harmonics of the voltage signal in frequency domain as the FDDM-CC signal.


**Patentansprüche**

1. Einrichtung zum Erzeugen eines Frequenzdomänenabstandsmessung-Kreuzkorrelations-, FDDM-CC, -Signals, umfassend:

ein erstes Eingabeterminal, das angepasst ist, erste Laserpulse zu empfangen;
ein zweites Eingabeterminal, das angepasst ist, zweite Laserpulse zu empfangen;
einen Detektor, der angepasst ist, die ersten Laserpulse und die zweiten Laserpulse zu kombinieren und die kombinierten Laserpulse in ein Spannungssignal umzuwandeln;
**gekennzeichnet durch**
eine Steuerung, die angepasst ist, eine Differenz zwischen relativen Spannungen zweier verschiedener Harmonischen des Spannungssignals in Frequenzdomäne als das FDDM-CC-Signal zu berechnen.

2. Einrichtung nach Anspruch 1, wobei die zwei verschiedenen Harmonischen nebeneinanderliegende Harmonische sind.

3. Einrichtung nach Anspruch 1 oder 2, wobei die zwei verschiedenen Harmonischen die zwölfte und die dreizehnte Harmonische sind.

4. Einrichtung nach einem der vorstehenden Ansprüche, wobei
die Einrichtung weiter einen ersten Pulslaser umfasst, der angepasst ist, die ersten Laserpulse auszugeben,
die zweiten Laserpulse von einem zweiten Pulslaser empfangen werden, und
die Steuerung angepasst ist, die Wiederholungsrate des ersten Pulslasers basierend auf dem FDDM-CC-Signal zu steuern, sodass der erste Pulslaser an den zweiten Pulslaser gebunden ist.

5. Einrichtung nach Anspruch 1, weiter umfassend
einen Pulslaser, der angepasst ist, Laserpulse auszugeben;

einen Referenzspiegel; und

einen Strahlteiler, der angepasst ist, die Laserpulse zu teilen und die geteilten Laserpulse an den Referenzspiegel und einen Zielspiegel, der bei einem Zielobjekt liegt, zu übertragen, wobei

das erste Eingabeterminal angepasst ist, die Laserpulse, die von dem Referenzspiegel reflektiert werden, zu empfangen,

das zweite Eingabeterminal angepasst ist, die Laserpulse, die von dem Zielspiegel reflektiert werden, als die zweiten Laserpulse zu empfangen, und

die Steuerung angepasst ist, den Abstand zu dem Zielobjekt basierend auf dem FDDM-CC-Signal zu bestimmen.

6. Einrichtung nach Anspruch 5, wobei die Steuerung angepasst ist, eine Zeitverschiebung zwischen zwei angrenzenden Laserpulsen basierend auf dem FDDM-CC-Signal zu berechnen und den Abstand basierend auf der berechneten Zeitverschiebung zu bestimmen.

7. Einrichtung nach Anspruch 6, wobei die Zeitverschiebung eine relative Zeitverschiebung ist, die als die Zeitverschiebung zwischen zwei angrenzenden Laserpulsen relativ zu der Wiederholungsrate des Pulslasers definiert ist.

8. Einrichtung nach Anspruch 7, wobei die Steuerung angepasst ist, die relative Zeitverschiebung dt unter Verwendung des Ausdrucks zu berechnen

$$dU_m = |cos(m \cdot \pi \cdot dt)|$$

wobei $dU_m$ eine relative Spannung der m-ten Harmonischen ist.

9. Einrichtung nach einem der Ansprüche 5-8, wobei
die Differenz zwischen den zwei verschiedenen Harmonischen basierend auf der m-ten und der n-ten Harmonischen mit Ganzzahlen m und n berechnet wird, und
die Steuerung angepasst ist, den Abstand zu dem Zielobjekt weiter basierend auf der Spannung der i-ten Harmonischen mit i<m<n zu bestimmen.

10. Verfahren, das von einer Einrichtung zum Erzeugen eines Frequenzdomänenabstandsmessung-Kreuzkorrelations-, FDDM-CC, -Signals durchgeführt wird, wobei die Einrichtung ein erstes Eingabeterminal, das angepasst ist, erste Laserpulse zu empfangen, und ein zweites Eingabeterminal, das angepasst ist, zweite Laserpulse zu empfangen, umfasst, wobei das Verfahren umfasst:

Kombinieren der ersten Laserpulse und der zweiten Laserpulse und Umwandeln der kombinierten Laserpulse in ein Spannungssignal,
**gekennzeichnet durch**
Berechnen einer Differenz zwischen relativen Spannungen zweier verschiedener Harmonischen des Spannungssignals in Frequenzdomäne als das FDDM-CC-Signal.

**Revendications**

1. Appareil pour générer un signal de Corrélation Croisée de Mesure de Distance dans le Domaine Fréquentiel, FDDM-CC, comprenant :

une première borne d'entrée adaptée pour recevoir des premières impulsions laser ;
une seconde borne d'entrée adaptée pour recevoir des secondes impulsions laser ;
un détecteur adapté pour combiner les premières impulsions laser et les secondes impulsions laser et transformer les impulsions laser combinées en un signal de tension ;
**caractérisé par**
un dispositif de commande adapté pour calculer une différence entre des tensions relatives de deux harmoniques différents du signal de tension dans le domaine fréquentiel en tant que signal FDDM-CC.

2. Appareil selon la revendication 1, dans lequel les deux harmoniques différents sont des harmoniques voisins.

3. Appareil selon la revendication 1 ou 2, dans lequel les deux harmoniques différents sont les douzième et treizième harmoniques.

**4.** Appareil selon l'une des revendications précédentes, dans lequel
l'appareil comprend en outre un premier laser à impulsions adapté pour délivrer en sortie les premières impulsions laser,
les secondes impulsions laser sont reçues d'un second laser à impulsions, et
le dispositif de commande est adapté pour commander la cadence de répétition du premier laser à impulsions sur la base du signal FDDM-CC de telle sorte que le premier laser à impulsions est verrouillé sur le second laser à impulsions.

**5.** Appareil selon la revendication 1, comprenant en outre
un laser à impulsions adapté pour délivrer en sortie des impulsions laser ;
un miroir de référence ; et
un diviseur de faisceau adapté pour diviser les impulsions laser et transmettre les impulsions laser divisées au miroir de référence et à un miroir cible situé au niveau d'un objet cible, dans lequel
la première borne d'entrée est adaptée pour recevoir les impulsions laser réfléchies par le miroir de référence,
la seconde borne d'entrée est adaptée pour recevoir les impulsions laser réfléchies par le miroir cible en tant que secondes impulsions laser, et
le dispositif de commande est adapté pour déterminer la distance jusqu'à l'objet cible sur la base du signal FDDM-CC.

**6.** Appareil selon la revendication 5, dans lequel le dispositif de commande est adapté pour calculer un décalage temporel entre deux impulsions laser adjacentes sur la base du signal FDDM-CC et déterminer la distance sur la base du décalage temporel calculé.

**7.** Appareil selon la revendication 6, dans lequel le décalage temporel est un décalage temporel relatif défini comme le décalage temporel entre deux impulsions laser adjacentes par rapport à la cadence de répétition du laser à impulsions.

**8.** Appareil selon la revendication 7, dans lequel le dispositif de commande est adapté pour déterminer le décalage temporel relatif dt en utilisant l'expression

$$dU_m = |\cos(m \cdot \pi \cdot dt)|$$

dans lequel $du_m$ est une tension relative du m-ième harmonique.

**9.** Appareil selon l'une des revendications 5-8, dans lequel
la différence entre les deux harmoniques différents est calculée sur la base des m-ième et n-ième harmoniques avec les nombres entiers m et n, et
le dispositif de commande est adapté pour déterminer la distance jusqu'à l'objet cible sur la base en outre de la tension du i-ème harmonique avec i<m<n.

**10.** Procédé réalisé par un appareil pour générer un signal de Corrélation Croisée de Mesure de Distance dans le Domaine Fréquentiel, FDDM-CC, dans lequel l'appareil comprend une première borne d'entrée adaptée pour recevoir des premières impulsions laser et une seconde borne d'entrée adaptée pour recevoir des secondes impulsions laser, dans lequel le procédé comprend :

la combinaison des premières impulsions laser et des secondes impulsions laser et la transformation des impulsions laser combinées en un signal de tension,
**caractérisé par**
le calcul d'une différence entre des tensions relatives de deux harmoniques différents du signal de tension dans le domaine fréquentiel en tant que signal FDDM-CC.

**Fig. 1**

**Fig. 2**

Fig. 3

**Fig. 4**

**Fig. 5**

**Fig. 6**

**Fig. 7**

Fig. 8

Fig. 9

**Fig. 10**

**Fig. 11**

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2405286 A1

### Non-patent literature cited in the description

- **JUN YE.** Absolute measurement of a long, arbitrary distance to less than an optical fringe. *Optics Letters,* 2004, vol. 29 (10
- Frequency Domain Distance Measurement for Formation Flights in Space. **B. EDER ; M. HUTTERER ; L. PEDROSA ; S. SCHWEYER ; P. PUTZER ; N. LEMKE ; R. KIENBERGER ; U. HUGENTOBLER.** 2015 European Conference on Lasers and Electro-Optics - European Quantum Electronics Conference. Optical Society of America, 2015
- **JEAN-DANIEL DESCHÊNES ; LAURA C. SINCLAIR ; FABRIZIO R. GIORGETTA ; WILLIAM C. SWANN ; ESTHER BAUMANN ; HUGO BERGERON ; MICHAEL CERMAK ; IAN CODDINGTON ; NATHAN R. NEWBURY.** Synchronization of Distant Optical Clocks at the Femtosecond Level. *Phys. Rev.*
- **KIM.** Absolute Distance Measurement using Femtosecond Laser. *Nano- and Micro-metrology, Proceedings of SPIE,* vol. 5858
- **GAO.** Measurement technologies for precision positioning. *CIRP Annals - Manufacturing Technology,* 2015, vol. 64, 773-796